Europäisches Patentamt

European Patent Office

Office européen des brevets

(19)

(11) **EP 1 132 440 A2**

(12) **EUROPEAN PATENT APPLICATION**

| | |
|---|---|
| (43) Date of publication:<br>**12.09.2001 Bulletin 2001/37** | (51) Int Cl.[7]: **C09D 11/00** |

(21) Application number: **01301485.7**

(22) Date of filing: **20.02.2001**

(84) Designated Contracting States:<br>**AT BE CH CY DE DK ES FI FR GB GR IE IT LI LU MC NL PT SE TR**<br>Designated Extension States:<br>**AL LT LV MK RO SI**

(30) Priority: **10.03.2000 US 523268**

(71) Applicant: **Scitex Digital Printing, Inc.**<br>**Dayton, Ohio 45420-4099 (US)**

(72) Inventors:
- **Botros, Raouf**<br>**Centerville, Ohio 45459 (US)**
- **Thakkar, Sharad R.**<br>**Beavercreek, Ohio 45434 (US)**

(74) Representative: **Freed, Arthur Woolf et al**<br>**Reginald W. Barker & Co.,**<br>**Clifford's Inn,**<br>**Fetter Lane**<br>**London EC4A 1BZ (GB)**

(54) **Waterfast pigment inks for ink jet printing**

(57)    An ink jet ink composition comprises chemically modified carbon black dispersion in presence or absence of black dye, a polymer such as ethoxylated polyethylene imine, in combination with N-methyl-pyrrolidone and other commonly used additives to improve water fastness on coated substrates to greater than 90%.

Printed by Jouve, 75001 PARIS (FR)

**Description**

Technical Field

The present invention relates to inks which are waterfast on coated substrates when applied and, more particularly, to enhancement in waterfastness of chemically modified pigmented ink jet inks on coated substrates.

Background Art

In the ink jet printing art, water soluble dyes are desirable for runnability. However, waterfast inks are highly desirable for producing permanent images. Decreasing the solubility of the dye increases the waterfastness, and vice versa. Achieving improvement in waterfastness of ink jet inks remains a top priority. A waterfast ink is highly desired for publishing and documentation, including in the lottery industry, to prevent alteration of information on such documents.

Current dye based inks utilize dyes which are water soluble (at least with limited solubility) which affects waterfastness negatively. A water based pigment ink, on the other hand, may be able to provide waterfastness as pigments are dispersed rather than dissolved. For pigment inks, then, redispersibility, rather than redissolvability, must be achieved to have good system start-up. Use of pigments rather than dyes creates further complications which are not present with dyes. For example, dye based inks provide dried film which has high dried film electrical resistivity. Pigment based inks, particularly carbon black inks, on the other hand, can provide dried films which are electrically conductive.

Traditionally, inks for continuous ink jet printers are obtained by dissolving water-soluble dyes in water or a mixture of water and water-soluble organic solvent(s). Water-soluble dyes are used to achieve acceptable redissolvability of the dried ink at the orifice plate. Use of pigments instead of dyes provide advantages, such as light-fastness and permanence. However, unless redispersibility is addressed, printer runnability and printhead life are affected.

Of late, chemically modified carbon black dispersions have been available. These dispersions have good redispersibility and provide good water fastness on uncoated substrates. However, on coated substrates, the same dispersion shows poorer water fastness.

It is seen then that there is a need for a dark, pigmented black ink with improved permanence on coated substrates and acceptable redispersibility.

Summary of the Invention

This need is met by the waterfast pigmented ink composition according to the present invention, wherein enhancement in waterfastness of pigmented ink jet inks is achieved by adding ethoxylated polyethylene imine in conjunction with chemically-modified carbon blacks to improve waterfastness to 100% on various paper substrates.

In accordance with one embodiment of the present invention, an ink composition comprises a pigment dispersion, an amine, ethoxylated polyethylene imine and water, for enhancement of waterfastness. The ink preferably comprises 0.1 to 3% (100% solids basis) of stock ethoxylated polyethyleneimine to which is added N-methyl pyrrolidone, to increase the waterfastness of the ink to a level greater than 90% on coated substrates.

Other objects and advantages of the invention will be apparent from the following description and the appended claims.

Detailed Description of the Invention

The ink jet ink composition of the present invention comprises a liquid vehicle, a chemically modified carbon black pigment, and at least 0.1% (100% solids basis) ethoxylated polyethylene imine to provide a waterfast black ink suitable for ink jet printing applications.

U.S. Patent No. 5,425,805, teaches improvement in waterfastness for dye-based inks. In the '805 patent, branched 80% ethoxylated polyethylene imine was used to provide over 90% waterfastness. The desired average molecular weight range for the polymer is 40,000 to 60,000.

The existing art also proposes achieving a carbon black dispersion via chemical surface modification as described in U.S. Patent Nos. 5,609,671 and 5,571,311. Such dispersions provide a significantly enhanced redispersibility. However, permanence on paper substrates is adversely affected due to this redispersibility and a lack of polymer.

The present invention, therefore, uses ethoxylated polyethylene imine in conjunction with the chemically modified carbon blacks to improve waterfastness of the ink up to 100% on various coated paper substrates.

In a preferred embodiment of the present invention, the ink composition comprises a pigment dispersion and a liquid vehicle, to which is added ethoxylated polyethyleneimine, to increase the waterfastness of the ink to levels greater than 90%.

The liquid vehicle in the ink jet ink composition of the present invention comprises an amine, preferably alkyl- and alkanol-substituted amines such as dimethylethanolamine, triethanolamine, diethylethanolamine and the like. Other additives that are optionally included in the vehicle of the invention include a corrosion inhibitor in an amount from 0 to 0.2 wt. % such as an alkanolamine; and a wetting agent of from 0 to 1 wt. %, such as an ethoxylated glycol ether; and a lower aliphatic alcohol having one hydroxy group and up to five carbon atoms in a straight or branched chain in an amount of 0 to 10 wt. %; and a biocide from 0 to 0.5 wt. % such as dehydroacetic acid. The ink may also include an optional defoamer such as phosphate esters, silicone or non-silicone defoamer or acetylenic diol.

In accordance with the present invention, a multitude of suitable carbon black pigments which are commercially available may be used to prepare the chemically modified carbon black dispersion to formulate the waterfast ink of the present invention.

In accordance with the present invention, EPI is added to ink comprising a pigment dispersion and an amine, in presence or absence of black dyes, the waterfastness of the ink is considerably enhanced. The following examples illustrate the effectiveness of adding EPI to an ink jet ink composition.

COMPARATIVE EXAMPLE 1

An experimental ink can be formulated by mixing the following components:

| Component | Weight % |
|---|---|
| pigment dispersion (15% solids) | 33 |
| amine | 3 |
| Deionized Water | 64 |

COMPARATIVE EXAMPLE 2

An experimental ink prepared with a polymer can be formulated by mixing the following components:

| Component | Weight % |
|---|---|
| pigment dispersion (15% solids) | 33 |
| amine | 3 |
| ethoxylated PEI (17% solids) | 1 |
| Deionized Water | 64 |

COMPARATIVE EXAMPLE 3

| Component | weight% |
|---|---|
| Pigment dispersion (15% solids) | 10 |
| Direct black dye (10% solids) | 14 |
| Ethoxylated EPI | 4 |
| Amine | 1 |
| DI water | 71 |

Drawdowns of ink formulated in accordance with Examples 1,2 and 3 were made using #6 bar. It was then dried, using a heat gun. After approximately 15 minutes, the ink composition was dipped in deionized water for one minute. After drying, the optical densities were measured. The ink was then applied on Champion Courtland Gloss #60 and Champion Registered Bond #24 substrates. These tests showed improvement in waterfastness from 82% of the ink in Example 1 on the glossy substrate, to 100% of the ink in Example 2 on the same substrate. The Registered Bond substrate also showed reduction in bleed from 5% of the ink in Example 1, to 0% of the ink in Example 2. Waterfastness is measured herein as percent retention of optical density of a printed sample or a drawdown after soaking in water for one minute. Percentages of retention and bleed can be calculated as follows:

$$\% \text{ Retention} = \text{O.D. (Undipped area)/O.D. (Dipped Area) X 100}$$

$$\% \text{ Bleed} = \{[\text{O.D. (Bleed) - O.D. (Blank Paper)}]/\{\text{O.D. (Undipped Area)}\} \text{ X 100.}$$

The improvement in bleed and retention, when polymer is added to the ink composition, is illustrated in the following table:

| Paper | Example 1 | Example 2 | Example 3 |
|---|---|---|---|
| Champion Courtland Gloss 60# paper | | | |
| Optical density | 1.95 | 1.86 | 1.33 |
| % Retention | 82 | 100 | 96 |
| % Bleed | 25 | 0 | 7 |
| Champion Register Bond 24# Paper | | | |
| Optical Density | 1.2 | 1.12 | 1.14 |
| % Retention | 100% | 100% | 100 |
| % of Bleed | 5% | 0% | 28 |

Examples 1 and 2 above demonstrate the effect of adding polymer to an ink jet ink composition. When the waterfast ink compositions were formulated as above in accordance with the present invention, the resultant inks were used in a continuous ink jet printer, such as the type manufactured by Scitex Digital Printing, Inc., in Dayton, Ohio, to test waterfastness. The prints generated using the ink formulated in accordance herewith achieved the waterfastness indicated in the examples as measured by retention of optical density after soaking in water for a specified time.
In general, addition of about 0.1% to about 3% (100% solids basis) of an ethoxylated PEI is expected to have a beneficial effect on ink composition waterfastness.

Industrial Applicability and Advantages

The present invention is useful in the field of ink jet printing, and has the advantage of formulating a waterfast ink for use in ink jet printing systems which has increased waterfastness and decreased solubility on substrates.
The invention has been described in detail with particular reference to certain preferred embodiments thereof, but it will be understood that modifications and variations can be effected within the spirit and scope of the invention.

**Claims**

1.  An ink jet ink composition comprising a pigment dispersion, an amine, ethoxylated polyethyleneimine, and water, for enhancement of waterfastness on coated substrates.

2.  An ink jet ink composition as claimed in claim 1 wherein the ethoxylated polyethyleneimine comprises 0.1 to 3%, 100% solids basis, of stock ethoxylated polyethyleneimine.

3.  An ink jet ink composition as claimed in claim 2 further comprising N-methyl-pyrrolidone to increase waterfastness of the ink to a level greater than 90% on coated substrates.

4.  An ink jet ink composition as claimed in claim 1 wherein the pigment dispersion comprises chemically modified carbon black dispersion to enhance redispersibility.

5. An ink jet ink composition as claimed in claim 1 wherein the amine comprises alkyl- and alkanol-substituted amines.

6. An ink jet ink composition as claimed in claim 1 further comprising a corrosion inhibitor in an amount from 0 to 0.2 wt. %.

7. An ink jet ink composition as claimed in claim 1 further comprising a wetting agent of from 0 to 1 wt. %.

8. An ink jet ink composition as claimed in claim 1 further comprising a biocide from 0 to 0.5 wt. %

9. An ink jet ink composition as claimed in claim 1 further comprising a defoamer.